# EUROPEAN PATENT APPLICATION

(11) **EP 1 354 565 A1**
(43) Date of publication of application: **22.10.2003**
(21) Application number: 03425230.4
(22) Date of filing: 11.04.2003
(51) Int. Cl.: A61C 3/025

(54) **A handpiece for cleaning tooth surfaces**

(30) Priority: 19.04.2002 IT BO20020211
(71) Applicant: CASTELLINI S.p.A., 40013 Castel Maggiore (Bologna) (IT)
(72) Inventor: Castellini, Franco, 40124 Bologna (IT)
(74) Representative: Lanzoni, Luciano

(57) **Abstract**

A handpiece (1) for cleaning tooth surfaces comprises a grip body (2) equipped, at one end, with a fitting (3) for conduits (4, 5) that supply an air and powder mixture and water, respectively, the grip body (2) being equipped, at the other end, with a spray head (6) presenting at least one endpiece or nozzle (7) for discharging the mixture and the water in such a way as to form a jet (F) of mixture and water directed at the surface of the tooth to be cleaned. The grip body (2) also includes lighting means (8) that generate a light beam directed at the working area defined by the jet (F) of mixture and water.

## Description

The present invention relates to a handpiece for cleaning tooth surfaces.

In the field of dental equipment, many different types of apparatus are known for cleaning tooth surfaces using a principal similar to that of sandblasting in which fluid mixtures containing air and abrasive powders are used.

In terms of general structure, apparatus of this kind consists of a fixed unit and a handpiece (as disclosed, for example, in United States patent publications 3,882,638 and 4,492,575).

The first fixed element comprises:
- a vessel containing the powder which is mixed with air to form a highly abrasive mixture used to contact the tooth surface to be cleaned;
- a turbulence chamber for receiving the powder from the tank in a flow of compressed air and equipped with openings for receiving the flow of compressed air and discharging the mixture of air and powder.

In some prior art solutions, the powder vessel itself constitutes the turbulence chamber and has openings for the compressed air.

The second element is the cleaning handpiece proper, equipped, at one end of it, with a fitting that connects it to the conduits for supplying the abrasive mixture and, at the other end, with a nozzle for discharging the abrasive mixture and water or a sterile liquid.

This handpiece, on account of the highly specific nature of its use, has to work even in parts of the tooth cavity that are difficult to illuminate with normal light sources such as the dental unit's standard lamp, thus making the dentist's work more arduous.

The present invention has for an object to overcome the above mentioned disadvantage by providing a handpiece for cleaning tooth surfaces that is structured in such a way as to provide a better view of the teeth being cleaned, thus significantly facilitating the dentist's work while maintaining the handpiece at a high standard of quality and minimising its overall dimensions.

This object is achieved by a handpiece for cleaning tooth surfaces comprising a grip body equipped, at one end, with a fitting for conduits that supply an air and powder mixture and water, the grip body being equipped, at the other end, with a spray head presenting at least one endpiece or nozzle for discharging the mixture and the water in such a way as to form a jet of mixture and water directed at the tooth surface to be cleaned; the grip body also including lighting means that generate a light beam directed at least at the working area defined by the jet of mixture and water.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 shows a handpiece for cleaning tooth surfaces according to the present invention in a side view with some parts in cross section and others cut away to better illustrate others;
- Figure 2 is a cross section through line II-II of Figure 1;
- Figure 3 is a side detail view, with some parts cut away in order to better illustrate others, showing a part of the inside of the handpiece of Figure 1;
- Figure 4 is schematic side view of another embodiment of the handpiece according to the present invention, connected to a unit for feeding the air and powder mixture and the water.

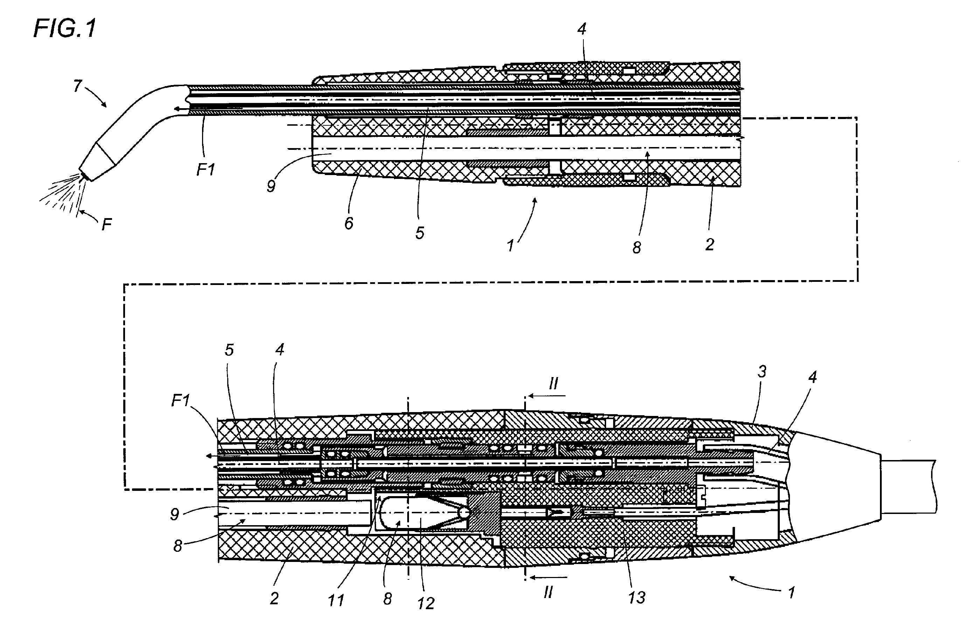

With reference to the accompanying drawings, in particular Figure 1, the handpiece according to the invention is designed to clean tooth surfaces using a principal similar to that of sandblasting in which fluid mixtures containing air and abrasive powders are used.

The handpiece, denoted in its entirety by the numeral 1, comprises a grip body 2 that is equipped, at one end, with a fitting 3 for conduits 4 and 5 that supply the air and powder mixture and the water, respectively.

At the other end of it, the grip body 2 is equipped with a spray head 6 presenting at least one endpiece or nozzle 7 for discharging the mixture and the water in such a way as to form a jet F of mixture and water directed at the surface of the tooth to be cleaned.

The grip body 2 also includes lighting means 8 that generate a light beam directed at the working area defined by the jet F of mixture and water on the tooth to be cleaned.

Figure 1 also shows that one section of the lighting means 8 is housed in the grip body 2 and is directed towards the spray head 6.

Another section of the lighting means 8 can be housed in the grip body 2 and is associated with the fitting 3 for the mixture and water conduits 4 and 5.

Looking more closely at the technical details, the lighting means 8 comprise a fibre optic conduit 9 located inside the grip body 2 and extending in parallel with the conduits 4 and 5 supplying the air and powder mixture and the water.

One end of the fibre optic conduit 9 leads out of the grip body 2 at the spray head 6, whilst the other end of the fibre optic conduit 9 leads into a cavity 11 which houses a lamp 12 constituting the other section of the lighting means 8.

Still with reference to Figure 1, the lamp 12 is associated with the fitting 3 for the conduits 4 and 5.

The fitting 3 has a mains power supply connector unit 13 for the lamp 12 enabling the latter to be used when the fitting 3 is coupled to the grip body 2.

To make room for the lighting means 8, the internal structure of the grip body 2 is such that the main conduit 4 and 5 is connected on one side to the discharge nozzle 7 and to the fitting 3 on the other side.

In practice, the main conduit 4 and 5 consists of a first inner channel 4 for conveying the mixture of air and powder and a second outer channel 5, around the first channel 4, for conveying the water.

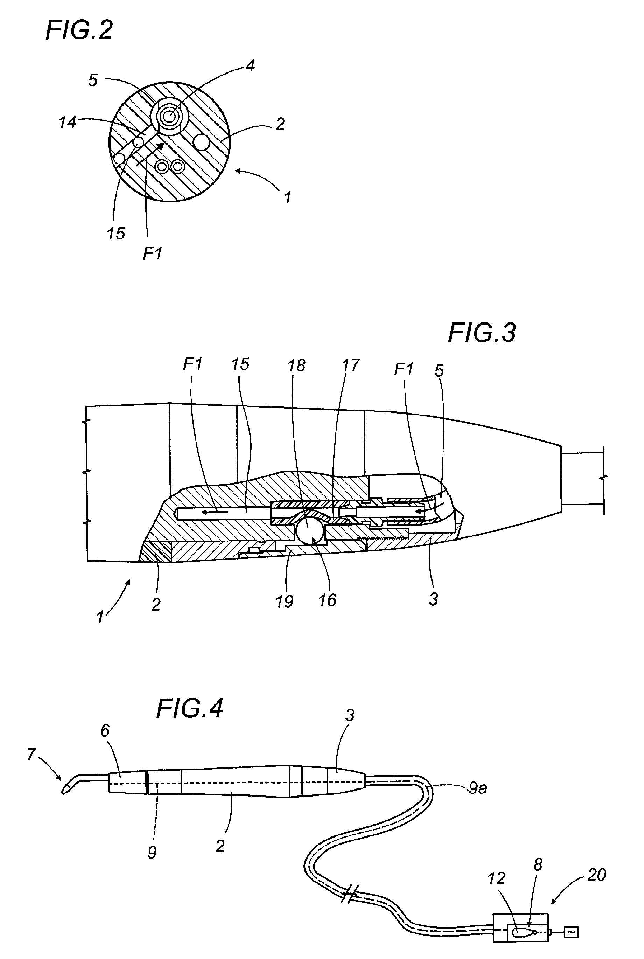

As shown in Figures 2 and 3, the second outer channel 5, is connected to a branch 14 which extends transversely to the main conduit 4 and 5 and which is connected to a third water supply channel 15 located inside the end fitting 3 (the water flow in the different conduits and branches is indicated by the arrows F1 in Figures 1 to 3).

The third channel 15 is equipped with means 16 for regulating the water flow rate and consisting of an elastic connector tube 17 that is radially acted upon by a ball 18 interposed between the tube 17 and a ring nut 19 located on the end fitting 3: by turning the ring nut 19 on the grip body 2, it is possible to reduce or enlarge the passageway through which the water is conveyed.

In another embodiment of the invention (shown in Figure 4), the grip body 2 is connected, through the end fitting 3, to a fixed unit 20 for supplying the air and powder mixture and the water and which, being of a type well within the knowledge of an expert in the trade, will not be described in detail.

The fixed unit 20 is used for mixing the air and powder to be sent to the handpiece 1, as a water container, and may, as in this case, also house at least a section of the lighting means 8.

In other terms, the lamp 12 may be housed directly in the fixed supply unit 20 which supplies at least one pair of fibre optic conduits 9 and 9a: the first conduit 9 extends from the head 6 of the grip body 2 to the fitting 3 (as described above); the second conduit 9a extends, coaxially with the first conduit 9, from the fitting 3 to the fixed unit 20 to a position facing the lamp 12 so as to allow the light beam to pass through it and reach the handpiece 1.

A handpiece structured as described above achieves the aforementioned objects thanks to a highly rational constructional architecture that enables the lighting means to be placed in the working area and allowing the dentist to clearly see the working area while the tooth surface is being cleaned.

This accessory does not involve major structural changes to the handpiece, which remains as compact and practical to use as the traditional solutions used up to now.

It will be understood that the invention can be subject to modifications and variations without thereby departing from the scope of the inventive concept. Moreover, all the details of the invention may be substituted by technically equivalent elements.

## Claims

1. A handpiece for cleaning tooth surfaces, the handpiece (1) being of the type comprising a grip body (2) equipped, at one end, with a fitting (3) for conduits (4, 5) that supply an air and powder mixture and water, respectively, the grip body (2) being equipped, at the other end, with a spray head (6) presenting at least one endpiece or nozzle (7) for discharging the mixture and the water in such a way as to form a jet (F) of mixture and water directed at the surface of the tooth to be cleaned, the handpiece being **characterised in that** the grip body (2) also includes lighting means (8) that generate a light beam directed at the working area defined by the jet (F) of mixture and water.

2. The handpiece according to claim 1, **characterised in that** at least one section (9) of the lighting means (8) are housed in the grip body (2) and lead out of the spray head (6).

3. The handpiece according to claim 1, **characterised in that** a section (12) of the lighting means (8) can be housed in the grip body (2) and is associated with the fitting (3) for the conduits (4, 5) for the mixture and the water.

4. The handpiece according to claim 1, **characterised in that** the lighting means (8) comprise at least one fibre optic conduit (9) located inside the grip body (2) and extending in parallel with the conduits (4, 5) supplying the air and powder mixture and the water; the fibre optic conduit (9) having one end leading out of the grip body (2) at the spray head (6), and the other end of the fibre optic conduit (9) leading into a cavity (11) which houses a lamp (12) constituting the other section of the lighting means (8).

5. The handpiece according to claim 4, **characterised in that** the lamp (12) is associated to a fitting (3) for conduits (4, 5) that supply an air and powder mixture and water; the fitting (3) having a mains power supply connector unit (13) for the lamp (12) enabling the latter to be used when the fitting (3) is coupled to the grip body (2).

6. The handpiece according to claim 1, **characterised in that** the grip body (2) has a main conduit (4, 5) connected on one side to the discharge nozzle (7) and on the other side to the fitting (3); the main conduit (4, 5) consisting of a first inner channel (4) for conveying the mixture of air and powder and a second outer channel (5), around the first channel (4), for conveying the water.

7. The handpiece according to claim 6, **characterised in that** the second outer channel (5), is connected to a branch (14) which extends transversely to the main conduit (4, 5) and which is connected to a third water supply channel (15) located inside the end fitting (3).

8. The handpiece according to claim 7, **characterised in that** the third channel (15) is equipped with means (16) for regulating the water flow rate and consisting of an elastic connector tube (17) that is radially acted upon by a ball (18), interposed between the tube (17) and a ring nut (19) on the end fitting (3), when the ring nut (19) is turned.

9. The handpiece according to claim 1, where the grip body (2) is connected, through the end fitting (3), to a fixed unit (20) that supplies the air and powder mixture and the water; **characterised in that** at least one section of the lighting means (8) is housed inside the fixed supply unit (20).

10. The handpiece according to claim 9, **characterised in that** the lighting means (8) comprise a lamp (12) housed in the fixed supply unit (20) and at least one pair of fibre optic conduits (9, 9a), of which the first (9) extends from the grip body (2) to the fitting (3), and the second (9a) extends, coaxially with the first (9), from the fitting (3) to the fixed unit (20) to a position facing the lamp (12).
